# EUROPEAN PATENT APPLICATION

(11) **EP 1 790 564 A1**
(43) Date of publication of application: **30.05.2007**
(21) Application number: 05025653.6
(22) Date of filing: 24.11.2005
(51) Int. Cl.: B62M 25/04, B62L 3/02

(54) **Control device for a bicycle derailleur**

(71) Applicant: CAMPAGNOLO S.R.L., 36100 Vicenza (VI) (IT)
(72) Inventor: Dal Pra, Giuseppe, 36010 Zane (Vicenza) (IT); De Pretto, Andrea, 36013 Piovene Rocchette (Vicenza) (IT)
(74) Representative: Riccardi, Elisa

(57) **Abstract**

The invention refers to a control device (1) for driving a derailleur, comprising:
- at least a manual actuation member (6, 7) to issue a command to shift the derailleur in a first direction and a command to shift the derailleur in a second direction opposed to the first one,
- a cable head holder (11) for securely coupling with a first end of an inextensible cable (14) having a second end securely coupled with the derailleur,
- a first mechanism (8) which in response to said command to shift the derailleur in the first direction and to said command to shift the derailleur in the second direction is moved among a set of stable positions, in a first direction and in a second direction, respectively, and
- a second mechanism (10) that converts the movement of the first mechanism (8) in a movement of the cable head holder (11).

## Description

The present invention relates to a control device used for driving a control cable of a bicycle mechanic derailleur.

The invention is independent of the handlebar shape and of the consequent control device conformation and therefore can be used both in bicycles with a straight handlebar, typical of mountain bikes, and in bicycles with a curved handlebar, typical of racing bicycles.

A bicycle is normally provided with two derailleurs, a front one associated with the crankset and a rear one associated with the sprocket assembly. In both cases, the derailleur engages the transmission chain shifting it on toothed wheels of different diameters and numbers of teeth, in order to obtain different gear ratios.

The shifting of the derailleur in the two directions is driven through a control device so mounted as to be easily handled by the cyclist, i.e. normally on the handlebar, near to the grips thereof. The control device includes alternatively a bidirectional lever, a pair of levers, a pair of push buttons or a lever and a push button, which function as manual actuation members to issue a command to shift the derailleur in a first direction and a command to shift the derailleur in a second direction.

In the same control device there can also be the brake lever for controlling the actuating cable of the brake of the front or rear wheel, in which case one commonly speaks of integrated control.

Conventionally, nearby the left grip there are the control device of the front derailleur and the brake lever of the front wheel, and vice versa nearby the right grip there are the control device of the rear derailleur and the brake lever of the rear wheel.

In case of a mechanical derailleur, the actuation of the derailleur shifting commands in the two directions takes place through a normally sheathed inextensible cable (typically called Bowden cable), one end of which is connected to the derailleur and the other end of which is connected to the control device. In the control device, the inextensible cable is subjected to a pull action for the derailleur shifting in one direction and is subjected to the return elastic force of the pull of the cable itself and/or of a counteracting spring provided in the derailleur itself for the derailleur shifting in the other direction.

Normally, the direction in which the shifting is caused by the return spring is that in which the chain passes from a larger diameter toothed wheel to a smaller diameter toothed wheel, i.e. the one of a so called downshifting; vice versa, the pulling action of the control cable occurs in the direction of a so called upshifting, in which the chain moves from a smaller diameter wheel to a larger diameter wheel. It is to be noted that the downshift in a front derailleur corresponds to passing to a smaller gear ratio, while in a rear derailleur it corresponds to passing to a higher gear ratio.

In the known control devices, the manual movement of the levers or buttons, or of the single lever, is directly converted, through a suitable mechanism of the control device, into the movement of a cable head holder, among a set of stable positions to each of which the positioning of the derailleur at the desired toothed wheel corresponds.

In a first type of well known control devices, the cable head holder is a cursor receiving an end portion of the cable, which is moved in a straight-line among a set of stable positions through the mechanism of the control device. For example, the manual actuation members can be a lever which actively controls the cursor displacement (i.e. it forces it during the entire displacement) and a push button which acts by release, letting the cursor free.

In a second type of well known devices, the cable head holder is a drum around which the cable is unwinded/winded, said drum being driven into rotation by the control device mechanism among a set of stable angular positions.

Known devices of this second type are described for example in documents: EP 1564131 A1 and EP 0504118 B1**,** which show control devices, for straight handlebar and curved handlebar, respectively, wherein the manual actuation members are two different levers, both of which actively control the cable-winding drum rotation; GB 2012893 A, which shows a control device wherein the manual actuation members are a lever which actively controls the cable-winding drum rotation and a push button acting by release, letting the cable-winding drum free; US 6792826 which shows a curved handlebar control device, wherein the manual actuation members are a first lever which actively controls the cable-winding drum rotation, and a second lever that acts by release, letting the cable-winding drum free; US 4658667 and US 3972247, both showing control devices wherein there is a single bidirectional manual actuation lever, which actively controls the cable-winding drum rotation in both directions.

The disclosures of the above mentioned documents are incorporated herein by reference.

The invention refers to a control device for driving a derailleur, comprising:
- at least a manual actuation member to issue a command to shift the derailleur in a first direction and a command to shift the derailleur in a second direction opposed to the first one, and
- a cable head holder for securely coupling with a first end of an inextensible cable having a second end securely coupled with the derailleur,
- a first mechanism which in response to said command to shift the derailleur in the first direction and to said command to shift the derailleur in the second direction is moved among a set of stable positions, in a first direction and in a second direction respectively,
- a second mechanism that transforms the movement of the first mechanism in a movement of the cable head holder.

According to the inventive provision of two different mechanisms, one (indexing mechanism) intended for to the conversion of the manual movement made by the cyclist and the other intended for to the conversion of the movement of the first mechanism into the movement of the cable head holder and eventually of the cable itself, it is possible to optimize each one of the two mechanisms, which is not constrained by the requirements of the conversion to which the other mechanism is intended for.

In particular, it is possible to arbitrarily and independently select the planes or the axes of the movements of the cable on the one hand and of the manual actuation members on the other hand, e.g. it is possible to orientate the end portion of the cable according to a substantially straight direction which causes less wear thereof, and at the same time to make the lever/s or the push buttons particularly ergonomic, also depending on the handlebar specific conformation.

Moreover, if the first and/or the second mechanism provide for matched toothed members (as for example a ratchet for the first mechanism and/or a pair rack-toothed sector for the second mechanism) it is possible to define the geometry of the teeth in the most adequate way for the specific function.

The control device can also be more easily adapted to the specific sprocket assembly or to the specific crankset.

The control device can also be easily designed to permit a multi-shifting in one or both directions.

In an embodiment an intermediate member is provided between the first and the second mechanisms.

Preferably, the first mechanism moves by a rotary movement among said set of stable positions.

In such a way it is possible to provide for a particularly compact first mechanism, it is easier to provide for a reduction ratio or a multiplication ratio between the stroke of the manual actuation member/s and the stroke of the cable head holder, as well as it is possible to provide for the possibility of carrying out a multiple shifting in one and/or in the other direction.

Moreover, preferably, the movement of the cable end holder comprises a straight component, e.g. it is a translational or rotary-translational movement.

In this way it can be avoided that the end portion of the cable is stressed by bending stresses directly caused by the winding of the cable, and also by the consequent torsion stresses caused by the typically braided structure of the cable; less wear of the cable itself is a consequence.

In particular, said cable head holder can be a cursor arranged to receive an end portion of the cable.

Based on the handlebar and the control device configuration it can be advantageous to select the mutual orientation of the axis of the rotary movement of the first mechanism and of the axis of the straight movement of the cable head holder, in such a way as to arrange the manual actuation members in an ergonomic position and/or in such a way as to have the inextensible cable take the desired path out of the control device, in particular to have it take a path substantially parallel to the handlebar portion to which the control device is fastened.

In an embodiment, the axis of the rotary movement of the first mechanism and the axis of the straight movement of the cable head holder are orthogonal.

In particular, said second mechanism can comprise a toothed sector in engagement with a rack.

The toothed sector can be eccentric with respect to the axis of the rotary movement of the first mechanism, the rack being not parallel to the end portion of the inextensible cable.

In this way, the angular movement of the first mechanism being equal, a variable straight movement of the inextensible cable head is obtained, suitable for the movement of the derailleur which is oblique with respect to the constant distance between the toothed wheels of the crankset and of the sprocket assembly.

In an alternative embodiment, the axis of the rotary movement of the first mechanism and the axis of the straight movement of the cable head holder are not orthogonal, and possibly they are parallel.

In particular, said second mechanism can comprise a worm gear.

Typically, said at least one manual actuation member is selected from the group comprised of: a bidirectional lever; a pair of levers; a lever and a push button; a pair of push buttons.

Said first mechanism can be active in both directions or active in the first direction and by release in the second direction.

Under active actuation or active control it is meant that the whole movement in one direction occurs as a consequence of the effort applied by the cyclist on the relative manual actuation member; vice versa, under actuation by release it is meant that a relevant part of the movement in one direction occurs by the action exerted by a spring or a similar return member as a consequence of the disengagement of a retaining member which normally maintains said first mechanism in one of the said stable positions even though under the action of the return member.

Advantageously, said first mechanism is able to move between two not adjacent stable positions in said set of stables positions in at least one of said first direction and second direction, in others words it is able to carry out a multiple gearshift in at least one direction.

Typically, the control device is integrated for driving also a bicycle brake.

The control device can be for a curved handlebar or for a straight handlebar.

Further features and advantages of the invention will be better pointed out from the description of preferred embodiments, made with reference to the attached drawings, wherein:
- Fig. 1 shows a bottom view of a first embodiment of the control device of the invention mounted on a bicycle straight handlebar;
- Fig. 2 shows a partially exploded view of the control device of Fig. 1;
- Fig. 3 shows a cross-sectional view of the control device of Fig. 1, without brake lever;
- Fig. 4 shows a side perspective view of a second embodiment of the control device of the invention, mounted on a bicycle curved handlebar; and
- Figs. 5 and 6 show mutually orthogonal cross-sectional views of the control device of Fig. 4.

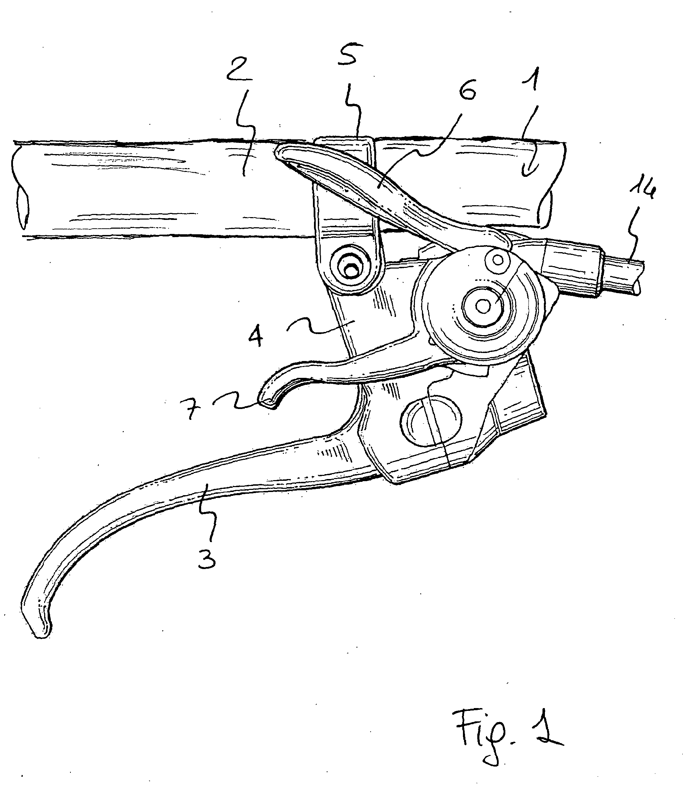

In Figures 1 to 3 a control device 1 according to a first embodiment of the invention is shown, mounted on an handlebar 2 of the straight type, typical of mountain bikes.

The control device 1 is a left control device, namely mounted on the left straight end of the handlebar 2 to carry out the shifting operations of the front derailleur; it is manifest that an analogous device could be used as a right control device mounted on the right straight end of the handlebar and associated with the rear derailleur.

The illustrated control device 1 is of the integrated type, i.e. it provides for a brake lever 3 to control in a *per se* known way the front brake (the rear brake in the case of a right control device). However it is manifest that the control device 1 could be not of an integrated type, and be associated with a separate brake lever upon mounting on the handlebar 2.

The control device 1 comprises a support body 4 connected to the handlebar 2 in a per se known way, for example through a clamp 5.

The control device 1 features manual actuation members in the form of a first lever 6 which commands the upshifts and of a second lever 7 that commands the downshifts. The levers 6 and 7 are moved along opposed curvilinear directions about respective axes parallel to an axis X, one by the thumb of the cyclist and the other by the other fingers of the cyclist.

A first mechanism 8 of the control device 1, in response to the actuation movement of the levers 6 and 7 carried out by the cyclist, moves by a rotary movement, among a set of stable angular positions, in a first direction and in a second direction about axis X, respectively.

The first mechanism 8 is not shown in details because it can have any of the well known structures for the purpose mentioned herein. Specific details can easily be found, for example, in the documents mentioned in the introductory portion of the present disclosure, particularly in EP 1564131 A1**,** GB 2012893 A**,** US 4658667 and US 3972247, which however directly move a cable-winding drum among a set of stable positions, in a first direction and in a second direction, respectively.

One or both of the levers 6 and 7 can be replaced by a push button, or the two levers 6 and 7 can be replaced by a single lever. The first mechanism 8 can be active in both directions, or can be active in one direction and by release in the other direction. The first mechanism 8 can also be suitable to only sequentially pass from a stable angular position to that immediately adjacent, or can also be suitable to pass among not immediately adjacent stable angular positions, or also it can perform differently in the two directions.

A second mechanism 10 of the control device 1 converts the rotary movement of the first mechanism 8 into a reciprocating movement of a cable head holder 11.

The first mechanism 8 and the second mechanism 10 are coupled through an intermediate member 9 free to rotate about a central pin 9a having as an axis the axis X.

The cable head holder 11 consists of a cursor 11 sliding in a guide 12 of the support body 4, having a longitudinal hole 13 which receives an end portion of an inextensible cable 14. The cable 14 is hooked to the cursor 11 through an enlarged head 15 at the cable end 14.

Cable 14 extends along the bicycle handlebar and frame, and its second end is securely coupled with the derailleur.

The second mechanism 10 of the control device 1 comprises a toothed sector 16 formed for example at a wheel of the intermediate member 9, and a rack 17 formed on said cable head holder or cursor 11, the toothed sector 16 and the rack 17 being engaged as shown in figure 3.

When the first mechanism 8 and the toothed sector 16 provided on the intermediate member 9 are moving from a first stable angular position to a second stable angular position as a consequence of the actuation of a lever 6 or 7 by the cyclist, the engagement between the toothed sector 16 and the rack 17 causes a straight movement of the cursor 11 of a predetermined entity along the direction Y, orthogonal to the axis X of the rotary movement of the first mechanism 8 and to the rotation axes of the levers 6, 7. Moreover, it is to be noted that the direction Y is substantially parallel to the handlebar 2, which reveals to be advantageous because the cable 14 is stressed neither by torsion stresses nor by bending stresses.

Even if in the figures the toothed sector 16 extends along an entire circumference, it will be apparent that it could extend along a smaller angle. Analogously, even if in the figures the rack 17 extends substantially along the entire cursor 11, it could extend only along a longitudinal portion thereof.

The radius of curvature of the toothed sector 16 and the conjugated shape of the toothed sector 16 and of the rack 17 can be selected, in a way totally independent of the particular configuration of the first mechanism 8, according to the specific sprocket assembly or to the specific crankset and to the aim of the best mechanical coupling between the toothed sector 16 and the rack 17.

The toothed sector 16 can also be eccentric with respect to the axis X of the rotary movement of the first mechanism 8, the rack 17 being not parallel to the end portion of the inextensible cable 14, in such a way that, the angular shift of the first mechanism 8 being equal, a variable straight shift of the head 15 of the inextensible cable 14 is obtained, suitable for the actual movement of the derailleur, which is oblique with respect to the constant distance between the toothed wheels of the crankset and of the sprocket assembly.

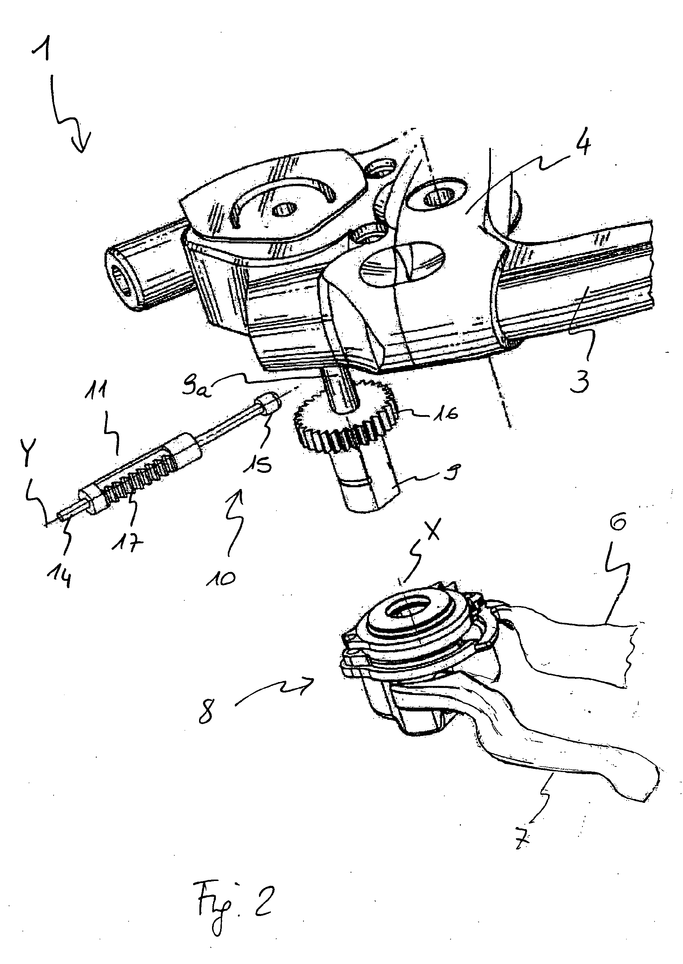

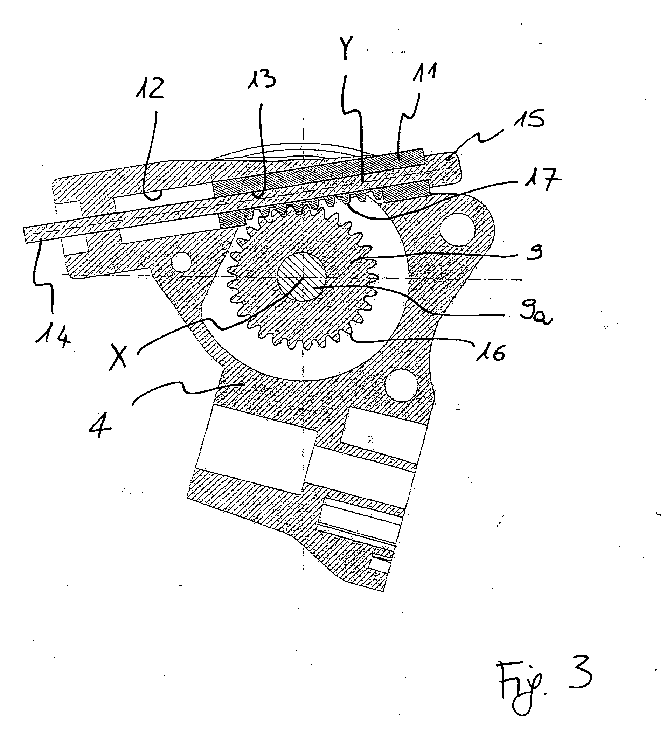

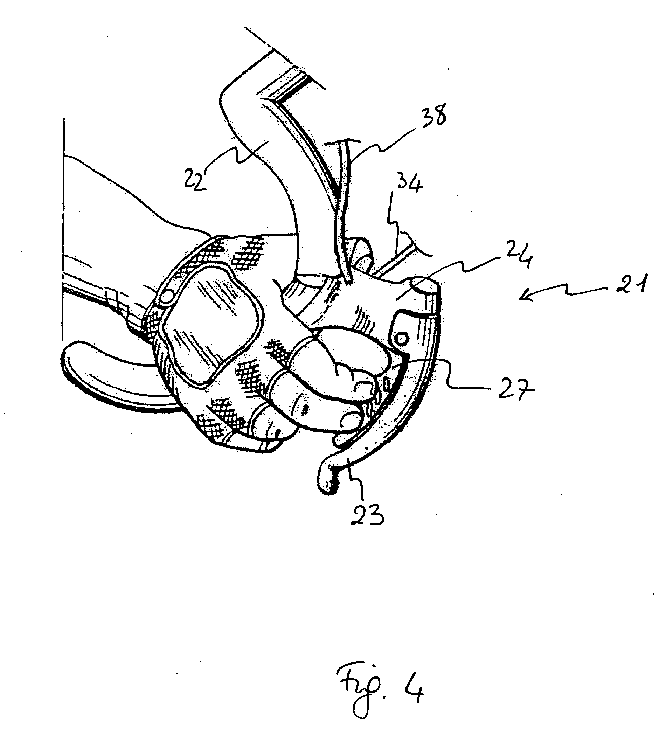

In figures 4 to 6 a control device 21 according to a second embodiment of the invention is shown, mounted on a handlebar 22 of the curved type, typical of racing bicycles.

The control device 21 is a right control device, i.e. mounted on the right curved end of the handlebar 22 for carrying out the gear shift of the rear derailleur, but it is manifest that an analogous device could be used as a left control device mounted on the left curved end of the handlebar 22 and associated with the front derailleur.

Also the illustrated control device 21 is of the integrated type, but the brake lever 23 could be absent.

The control device 21 comprises a support body 24 connected with the handlebar 22 at a rear side thereof, frontally of the curved grip portion of the handlebar 22 through known connections means, for example through a clamp 25, and projecting forwards from the handlebar 22 to be grippable by the cyclist.

The control device 21 features manual actuation members in the form of a first lever 26 which commands the downshifts and of a second lever 27 which commands the upshifts. The levers 26 and 27 can be actuated along opposed curvilinear directions around respective axes parallel to an axis X, the downshift lever 26 by the thumb of the cyclist and the other by the other cyclist's fingers.

A first mechanism 28 of the control device 21, in response to the actuation movement of the levers 26 and 27 made by the cyclist, is moved by a rotary movement about axis X, among a set of stable positions, in a first direction and in a second direction, respectively.

The first mechanism 28 is not shown in details because it can have any of the well known structures for the mentioned purpose. Specific details can be easily found, for example, in the documents EP 0504118 B1 and US 6792826 mentioned in the introductory portion of the present disclosure, that however directly move a cable-winding drum among a set of stable positions, in a first direction and in a second direction, respectively.

One or both of the levers 26 and 27 can be replaced by a push button, or the two levers 26 and 27 can be replaced by a single lever. The first mechanism 28 can be active in both directions, or can be active in a direction and by release in the other direction. The first mechanism 28 can also be suitable to only sequentially pass from a stable angular position to that immediately adjacent or can also be suitable to pass among not immediately adjacent stable angular positions, or also can perform differently in the two directions.

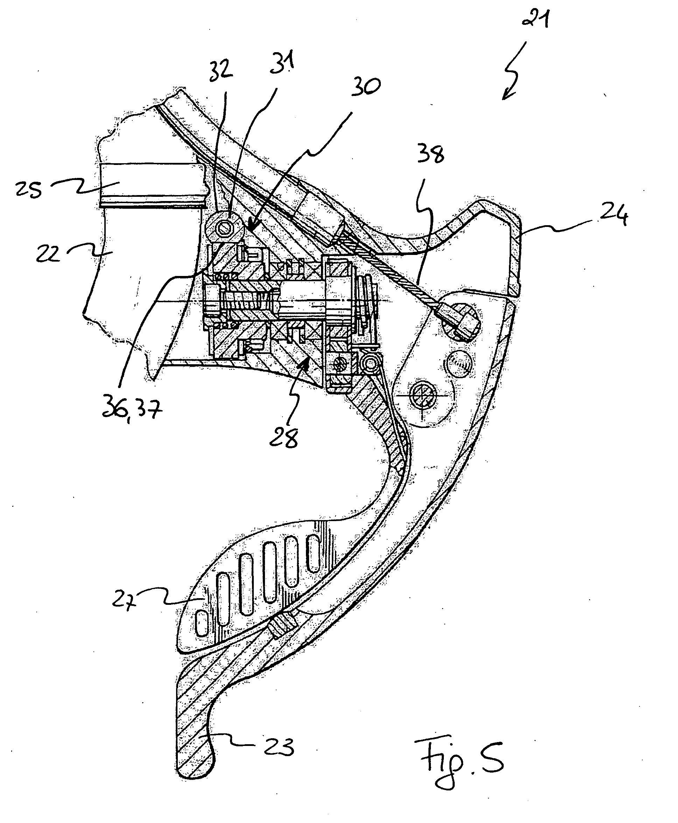

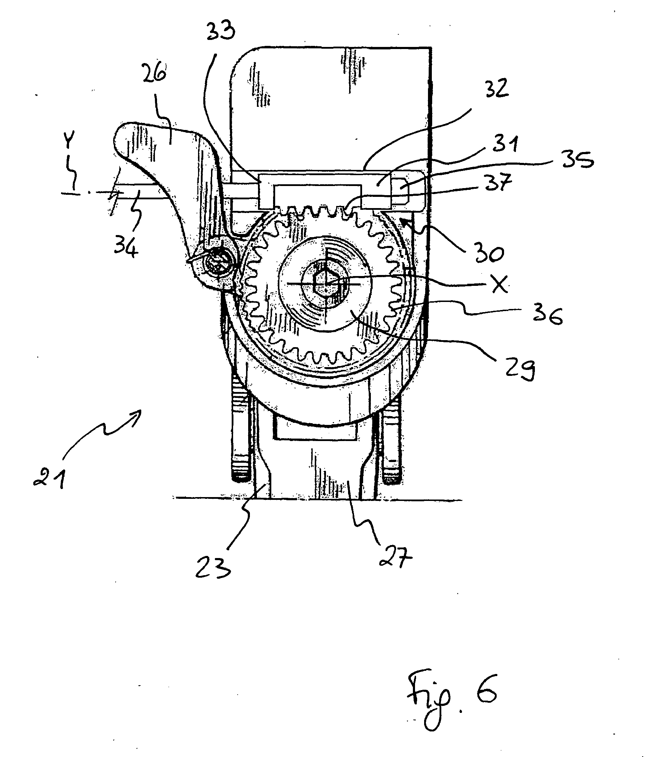

In particular, it must be noted that -in the plane of figure 6- the rotation axes of the levers 26 and 27 are arranged in positions at 90° about the axis X of the rotary movement of the first mechanism 28, so as to be arranged in a particularly ergonomic way in the control device 21.

A second mechanism 30 of the control device 21 converts the rotary movement of the first mechanism 28 in a straight movement of a cable head holder 31.

The cable head holder 31 consists of a cursor 31 sliding in a guide 32 of the support body 24, having a longitudinal hole 33 which receives an end portion of an inextensible cable 34. The cable 34 is hooked to the cursor 31 through an enlarged head 35 at the end of the cable 34.

The second end of the cable 34 is coupled with the derailleur (not shown).

The second mechanism 30 of the control device 21 comprises a toothed sector 36 and a rack 37 of said cable head holder or cursor 31, the toothed sector 36 and the rack 37 being engaged as shown in figure 6.

When the first mechanism 28 and thus the toothed sector 36 move from a first stable angular position to a second stable angular position as a consequence of the actuation of one of the levers 26 or 27 by the cyclist, the engagement between the toothed sector 36 and the rack 37 causes a straight shift of the cursor 31 of a predetermined entity along the direction Y, orthogonal to the axis X of the rotary movement of the first mechanism 28 and to the rotation axes of the levers 26, 27. It is to be noted, also, that the direction Y is substantially perpendicular to the handlebar 22 at the curved portion, but substantially parallel to the central portion of the handlebar, along which cable 34 extends. The cable 34 exits in fact from the surface of the support body 24 facing the centre of the handlebar 22 and so it is stressed neither by torsion stresses nor by bending stresses.

In an alternative embodiment, the axis Y of the head holder 31 of the cable 34 can be parallel or at an acute angle with respect to the axis X of the rotary movement of the first mechanism 28, and the second mechanism 30 can be a worm gear, comprising two conjugated threads. In this case, the cable 34 can exit from the support body 24 for example substantially parallel to the curved portion of the handlebar 22, similarly to the brake cable 38.

Also in the case of the second embodiment, the toothed sector 36 could extend along an angle smaller than an entire circumference and the rack 37 could extend only along a longitudinal portion of the cursor 31.

Also in this case, the radius of curvature of the toothed sector 36 and the conjugated shape of the toothed sector 36 and of the rack 37 can be appropriately selected, in a way totally independent of the particular configuration of the first mechanism 28, according to the specific sprocket assembly or the specific crankset.

Moreover, also in this case the toothed sector 36 can be eccentric with respect to the axis X of the rotary movement of the first mechanism 28, the rack 37 being not parallel to the end portion of the inextensible cable 34, to cause a variable straight shifting of the head 35 of the inextensible cable 34, suitable for the oblique movement of the derailleur with respect to the constant distance between the toothed wheels of the crankset and of the sprocket assembly.

It is finally worthwhile emphasizing that in this embodiment the coupling between the first mechanism 28 and the second mechanism 30 is direct, but it would be possible to provide for an intermediate member in a manner analogous to the previous embodiment.

## Claims

1. Control device (1, 21) for driving a derailleur, comprising:
- at least a manual actuation member(6, 7, 26, 27) to issue a command to shift the derailleur in a first direction and a command to shift the derailleur in a second direction opposed to the first one,
- a cable head holder (11, 31) for securely coupling with a first end of an inextensible cable (14, 34) having a second end securely coupled with the derailleur,
- a first mechanism (8, 28) which in response to said command to shift the derailleur in the first direction and to said command to shift the derailleur in the second direction is moved among a set of stable positions, in a first direction and in a second direction, respectively, and
- a second mechanism (10, 30) that converts the movement of the first mechanism (8, 28) in a movement of the cable head holder (11, 31).

2. Control device (1) according to claim 1, **characterized by** comprising an intermediate member (9) between said first mechanism (8) and said second mechanism (10).

3. Control device (1, 21) according to claim 1 or 2, **characterized in that** said first mechanism (8, 28) moves by a rotary movement among said set of stable positions.

4. Control device (1, 21) according to one of the preceding claims, **characterized in that** said movement of the cable head holder (11, 31) includes a straight component.

5. Control device (1, 21) according to claim 4, **characterized in that** said cable head holder (11, 31) is a cursor arranged to receive an end portion of the cable (14, 34).

6. Control device (1, 21) according to claim 4 when depending on claim 3, **characterized in that** the axis (X) of the rotary movement of the first mechanism (8, 28) and the axis (Y) of the straight movement of the cable head holder (11, 31) are orthogonal.

7. Control device (1, 21) according to claim 6, **characterized in that** said second mechanism (10, 30) comprises a toothed sector (16, 36) in engagement with a rack (17, 37).

8. Control device (1, 21) according to claim 7, **characterized in that** said toothed sector (16, 36) is eccentric with respect to the axis (X) of the rotary movement of the first mechanism (8, 28), and said rack (17, 37) is not parallel to said end portion of the inextensible cable (14, 34).

9. Control device (1, 21) according to claim 4 when depending on claim 3, **characterized in that** the axis (X) of the rotary movement of the first mechanism (8, 28) and the axis (Y) of the straight movement of the cable head holder (11, 31) are not orthogonal.

10. Control device (1, 21) according to claim 9, **characterized in that** the axis (X) of the rotary movement of the first mechanism (8, 28) and the axis (Y) of the straight movement of the cable head holder (11, 31) are parallel.

11. Control devices (1, 21) according to one of claims 9 and 10, **characterized in that** said second mechanism (10, 30) comprises a worm gear.

12. Control device (1, 21) according to any of the preceding claims, **characterized in that** said at least one manual actuation member (6, 7, 26, 27) is selected from the group comprised of: a bidirectional lever; a pair of levers; a lever and a push button; a pair of push buttons.

13. Control device (1, 21) according to any of the preceding claims, **characterized in that** said first mechanism (8, 28) is active in both directions.

14. Control device (1, 21) according to any of the preceding claims, **characterized in that** said first mechanism (8, 28) is active in the first direction and by release in the second direction.

15. Control device (1, 21) according to any of the preceding claims, **characterized in that** said first mechanism (8, 28) is able to move between two not adjacent stable positions in said set of stable positions in at least one of said first direction and second direction.

16. Control device (1, 21) according to any of the preceding claims, **characterized in that** the control device is integrated for driving (3, 23) also a bicycle brake.

17. Control device (1) according to any of the preceding claims, **characterized in that** it is adapted for mounting on a straight handlebar.

18. Control device (21) according to any of the preceding claims, **characterized in that** it is adapted for mounting on a curved handlebar.
